# EUROPEAN PATENT SPECIFICATION

(11) **EP 2 157 389 B1**
(45) Date of publication and mention of the grant of the patent: **02.12.2015**
(21) Application number: 08739653.7
(22) Date of filing: 02.04.2008
(51) Int. Cl.: F28D 1/047, F24F 11/02, F25B 1/00, F25B 39/00

(54) **AIR CONDITIONER COMPRISING A HEAT EXCHANGER**
KLIMAANLAGE MIT WÄRMETAUSCHER
CONDITIONNEUR D'AIR AVEC ÉCHANGEUR DE CHALEUR

(30) Priority: 06.04.2007 JP 2007101033
(43) Date of publication of application: 24.02.2010
(73) Proprietor: Daikin Industries, Ltd., Osaka 530-8323 (JP)
(72) Inventor: MAKINO, Tatsuya, Sakai-shi Osaka 591-8511 (JP)
(74) Representative: Hoffmann Eitle
(86) International application number: PCT/JP2008/056542
(87) International publication number: WO 2008/126733

(56) References cited:
- WO-A1-2007/017969
- JP-A- 07 083 593
- JP-A- 07 083 593
- JP-A- 11 304 259
- JP-A- 2004 003 827
- JP-A- 2004 003 827
- JP-A- 2007 071 505
- JP-A- 2007 071 505
- US-A- 485 315
- US-A- 5 542 271

## Description

### TECHNICAL FIELD

The present invention relates to an air conditioner comprising a heat exchanger through which refrigerant passes.

### BACKGROUND ART

Conventionally, for the purpose of improving heat exchange efficiency in a heat exchanger, there has been devised a heat exchanger where innovations have been applied to pipes through which refrigerant passes.

For example, in the heat exchanger described in patent document 1 indicated below, there has been proposed a technology which, when the heat exchanger is given a configuration where one pipe is caused to branch into two pipes whose inner diameters are equal, is capable of reducing the difference between pressure loss in the flow of the refrigerant passing through the one pipe before branching and pressure loss in the flows of the refrigerant respectively passing through each of the two pipes (whose total passage area increases) after branching. Specifically, pressure loss in the two pipes into which the one pipe branches tends to become lower than pressure loss in the one pipe, so in order to increase pressure loss in the two pipes into which the one pipe branches, their inner peripheries have a concavo-convex shape. Thus, modification can be done so as to equalize pressure loss inside the pipes between the one pipe and the two pipes into which the one pipe branches, and heat exchange efficiency can be improved.

Furthermore, patent document 2 relates to a heat exchanger for an air conditioner in which circuits are increased or decreased in sequence from an inlet of refrigerant to an outlet of refrigerant in a refrigerant flow passage. Further, hair pin tubs are arranged not to bridge over bent parts of the plate fins, and bends bridging the bent parts are connected after bending the plate fins.
Patent Document 1: Japanese Patent Application Laid-open Publication No. 9-79697
Patent Document 2: Japanese Patent Application with Publication No. 07 083593

### DISCLOSURE OF THE INVENTION

### <Technical Problem>

However, in the heat exchanger described in the aforementioned patent document 1, although it may be able to reduce the difference in pressure loss before branching and after branching, no work whatsoever is done in order to improve heat exchange efficiency utilizing state changes in the refrigerant flowing through the inside.

That is, as the refrigerant passes through the inside of the heat exchanger, the refrigerant changes state from a gas phase state to a gas-liquid two-phase state and from the gas-liquid two-phase state to a liquid phase state. For this reason, inside the heat exchanger, the density of the refrigerant differs depending on the state of the refrigerant passing therethrough. In this manner, whereas the state of the refrigerant is differently distributed inside a heat exchanger, in the heat exchanger of the above-described patent document 1, no work whatsoever is done in regard to technology for improving heat exchange efficiency utilizing state characteristics of the refrigerant.

An air conditioner having a heat exchanger according to the preamble of claims 1 and 2 is known from document JP-2007-46804.

The present invention has been made in light of the aforementioned point, and it is an object of the present invention to provide an air conditioner with a heat exchanger that is capable of improving heat exchange efficiency in correspondence to phase changes in the refrigerant.

### <Solution to the Problem>

An air conditioner pertaining to a first aspect of the invention comprises: a heat exchanger that causes refrigerant to pass therethrough while changing the state of the refrigerant and comprises plural fins and pipes. The plural fins are arranged side-by-side in a plate thickness direction. The pipe penetrates the plural fins from the plate thickness direction. Additionally, the pipe branches at least two times such that the number of pipes through which the refrigerant passes increases between a first inlet/outlet and second inlets/outlets of a fin group. Here, the fin group comprises the plural fins. Here, it suffices for a pipe that branches once to further branch, such that there are included not just a case where one pipe is branched into two pipes and the two branching pipes respectively branch to become four pipes but also a case where one pipe of two branching pipes branches to become three pipes. The heat exchanger further comprises a branch memory that stores data relating to branching positions of the pipe in the heat exchanger; a state quantity detector that detects state quantities of the refrigerant flowing through the pipe; a fan that supplies a flow of air to the heat exchanger; and a controller that controls the air volume of the fan such that the state of the refrigerant before the branching positions is different from the state of the refrigerant after the branching positions on the basis of values that the state quantity detector has detected and the data stored in the branch memory. As the state quantities that the state quantity detector here detects, for example, temperature and pressure are included. Further, the pipes branch just two times between the first inlet/outlet and the second inlets/outlets.

Here, there are cases where the refrigerant flowing in from the first inlet/outlet of the fin group changes state from a liquid phase state to a gas-liquid two-phase state and from the gas-liquid two-phase state to a gas phase state between the first inlet/outlet and the second inlets/outlets of the fin group. In such a case, the pipe is caused to branch such that the number of pipes increases in a place from the liquid phase state refrigerant distribution portion to the gas-liquid two-phase state refrigerant distribution portion, and the pipe is caused to further branch such that the number of pipes increases from the gas-liquid two-phase state refrigerant distribution portion to the gas phase state refrigerant distribution portion. Thus, the pipe is caused to branch in two stages such that numbers of passing pipes corresponding to the states of the refrigerant can be realized. For this reason, in the arrangement of the heat exchanger, by making the side where the number of pipes is small the liquid phase side, the flow velocity on the liquid phase side can be increased, and by making the side where the number of pipes is large the gas phase side, pressure loss on the gas phase side can be controlled.

Thus, it becomes possible to improve heat exchange efficiency in correspondence to phase changes in the refrigerant.

In addition, branching portions of the pipe of the heat exchanger are formed in just two portions: the portion where the refrigerant changes from the liquid phase state to the gas-liquid two-phase state and the portion where the refrigerant changes from the gas-liquid two-phase state to the gas phase state.

Thus, heat exchange efficiency can be effectively improved even with a simplified structure where there are branching portions in only two places.

Further, the air conditioner is not just disposed with the heat exchanger in which the branching portions are disposed in accordance with the refrigerant distribution but is also disposed with the fan that supplies a flow of air with respect to the heat exchanger. Additionally, the controller controls the air volume of the fan such that the state of the refrigerant before the branching positions is different from the state of the refrigerant after the branching positions in accordance with the values that the state quantity detector has detected and the data stored in the branch memory indicating the branching positions. For this reason, it becomes possible to more accurately align the refrigerant distribution in the heat exchanger with respect to the branching positions.

Thus, it becomes possible to further improve heat exchange efficiency.

An air conditioner pertaining to a second aspect of the invention comprises: a heat exchanger that causes refrigerant to pass therethrough while changing the state of the refrigerant and comprises plural fins and pipes. The plural fins are arranged side-by-side in a plate thickness direction. The pipe penetrates the plural fins from the plate thickness direction. Additionally, the pipe branches at least two times such that the number of pipes through which the refrigerant passes increases between a first inlet/outlet and second inlets/outlets of a fin group. Here, the fin group comprises the plural fins. Here, it suffices for a pipe that branches once to further branch, such that there are included not just a case where one pipe is branched into two pipes and the two branching pipes respectively branch to become four pipes but also a case where one pipe of two branching pipes branches to become three pipes. The heat exchanger further comprises a branch memory that stores data relating to branching positions of the pipe in the heat exchanger; a state quantity detector that detects state quantities of the refrigerant flowing through the pipe; a compressor that controls the flow velocity of the refrigerant supplied to the heat exchanger by controlling the frequency of the compressor; and a controller that controls the frequency of the compressor such that the state of the refrigerant before the branching positions is different from the state of the refrigerant after the branching positions on the basis of values that the state quantity detector has detected and the data stored in the branch memory. As the state quantities that the state quantity detector here detects, for example, temperature and pressure are included. Further, the pipes branch just two times between the first inlet/outlet and the second inlets/outlets.

Here, there are cases where the refrigerant flowing in from the first inlet/outlet of the fin group changes state from a liquid phase state to a gas-liquid two-phase state and from the gas-liquid two-phase state to a gas phase state between the first inlet/outlet and the second inlets/outlets of the fin group. In such a case, the pipe is caused to branch such that the number of pipes increases in a place from the liquid phase state refrigerant distribution portion to the gas-liquid two-phase state refrigerant distribution portion, and the pipe is caused to further branch such that the number of pipes increases from the gas-liquid two-phase state refrigerant distribution portion to the gas phase state refrigerant distribution portion. Thus, the pipe is caused to branch in two stages such that numbers of passing pipes corresponding to the states of the refrigerant can be realized. For this reason, in the arrangement of the heat exchanger, by making the side where the number of pipes is small the liquid phase side, the flow velocity on the liquid phase side can be increased, and by making the side where the number of pipes is large the gas phase side, pressure loss on the gas phase side can be controlled.

Thus, it becomes possible to improve heat exchange efficiency in correspondence to phase changes in the refrigerant.

In addition, branching portions of the pipe of the heat exchanger are formed in just two portions: the portion where the refrigerant changes from the liquid phase state to the gas-liquid two-phase state and the portion where the refrigerant changes from the gas-liquid two-phase state to the gas phase state.

Thus, heat exchange efficiency can be effectively improved even with a simplified structure where there are branching portions in only two places.

Further, the air conditioner is not just disposed with the heat exchanger in which the branching portions are disposed in accordance with the refrigerant distribution but is also disposed with the compressor that controls the flow velocity of the refrigerant supplied with respect to the heat exchanger. Additionally, the controller controls the frequency of the compressor such that the state of the refrigerant before the branching positions is different from the state of the refrigerant after the branching positions in accordance with the values that the state quantity detector has detected and the data stored in the branch memory indicating branching positions. For this reason, it becomes possible to more accurately align the refrigerant distribution in the heat exchanger with respect to the branching positions.

Thus, it becomes possible to further improve heat exchange efficiency.

A heat exchanger pertaining to an air conditioner according to a third aspect of the invention is a heat exchanger according to the first or second aspect of the invention, wherein branching portions of the pipe are disposed at least in a portion near a boundary that separates the refrigerant in a liquid phase state from the refrigerant in a gas-liquid two-phase state and a portion near a boundary that separates the refrigerant in the gas-liquid two-phase state from the refrigerant in a gas phase state.

Here, the branching positions of the pipe correspond to positions where the phase state of the refrigerant changes respectively. For this reason, the portion where the refrigerant in the liquid phase state flows, the portion where the refrigerant in the gas-liquid two-phase state flows and the portion where the refrigerant in the gas phase state flows are more clearly differentiated.

Thus, it becomes possible to more effectively improve heat exchange efficiency corresponding to phase changes in the refrigerant.

A heat exchanger pertaining to an air conditioner according to a fourth aspect of the invention is the heat exchanger of the first, second or third aspect of the invention, wherein inner diameters of a plurality of branched pipes are substantially equal to each other.

Here, the inner diameters of the plurality of branched pipes are substantially equal, so it becomes possible to control manufacturing costs in comparison to manufacturing a heat exchanger where the inner diameters of the branched pipes are different.

A heat exchanger pertaining to an air conditioner according to a fifth aspect of the invention is the heat exchanger of any one of the first to fourth aspects of the invention, wherein branching portions of the pipe have a structure that inverts the direction in which the refrigerant flows.

Here, the branching portions of the pipe invert the direction in which the refrigerant flows, so the flow of the refrigerant before being branched and the flow of the refrigerant after being branched are inverted. For this reason, more heat-exchangeable portions can be ensured because the heat exchanger can be given a configuration where the branching portions of the pipe do not just simply cause the flow of refrigerant to branch but also cause the flow of refrigerant to pass through the fin group in both the pipes before branching and the pipes after branching.

Thus, heat exchange through the fin group becomes possible in regard to both before and after branching, and heat exchange efficiency can be improved even more.

A heat exchanger pertaining to an air conditioner according to a sixth aspect of the invention is the heat exchanger of any of the first aspect to the fifth aspect of the invention, wherein the pipe branches such that one pipe becomes two pipes at the first branch and such that two pipes become four pipes at the second branch.

Here, targetability with respect to the flowing refrigerant can be ensured by causing a pipe that has branched once to branch again respectively.

Thus, it becomes possible to equalize the states of the refrigerant in accordance with the pipe positions, and it becomes possible to improve heat exchange efficiency more.

A heat exchanger pertaining to an air conditioner according to a seventh aspect of the invention is the heat exchanger of any of the first aspect to the sixth aspect of the invention, wherein the pipe branches at positions where the flow velocity of the refrigerant in the second inlets/outlets of the fin group with respect to the flow velocity of the refrigerant in the first inlet/outlet of the fin group becomes doubled or more and tripled or less.

Here, the branching positions are disposed such that the flow velocity of the refrigerant in the gas state whose density is low becomes doubled or more and tripled or less the flow velocity of the refrigerant in the liquid state whose density is high.

Thus, it becomes possible to make heat exchange corresponding to state changes in the refrigerant even more effective.

### BRIEF DESCRIPTION OF THE DRAWINGS

FIG 1 is a refrigerant circuit diagram of an air conditioner pertaining to an embodiment of the present invention.
FIG 2 is a block configuration diagram of the air conditioner.
FIG 3 is a schematic external perspective diagram of a heat exchanger.
FIG 4 is a conceptual diagram showing a connecting portion of the heat exchanger.
FIG 5 is a Mollier diagram in regard to the air conditioner.

### EXPLANATION OF THE REFERENCE SIGNS

1 : Air Conditioner
23 : Outdoor Heat Exchanger
42 : Indoor Heat Exchanger
52 : Indoor Heat Exchanger
60 : Heat Exchange Component (Fin Group)
61 : Fins
62 : Heat Transfer Tubes
63 : Connecting Portion
64 : U-shaped Pipe
65 : First Y-Shaped Pipe (Branching Portion, Second Triple-Forked Structural Body)
66 : Second Y-Shaped Pipe (Branching Portion, Second Triple-Forked Structural Body)
67 : Third Y-Shaped Pipe (Branching Portion, First Triple-Forked Structural Body)
G : Inlet/Outlet (First Inlet/Outlet)
P : Pipe
S 1 to S4 : Inlets/Outlets (Second Inlets/Outlets)

### BEST MODE FOR CARRYING OUT THE INVENTION

An embodiment of an air conditioner in which a heat exchanger pertaining to the present invention is employed will be described below on the basis of the drawings.

### <Configuration of Air Conditioner>

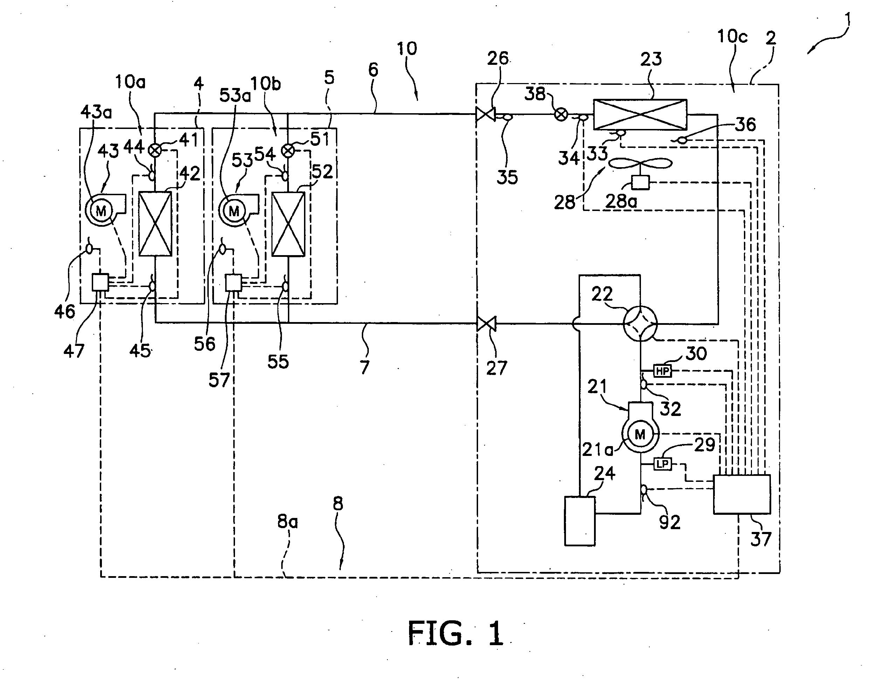

FIG 1 is a schematic configuration diagram of an air conditioner 1 pertaining to the embodiment of the present invention.

The air conditioner 1 is an apparatus that is used to heat and cool the inside of a room in a building or the like by performing a vapor compression refrigeration cycle operation. The air conditioner 1 is mainly equipped with one outdoor unit 2 serving as a heat source unit, plural (in the present embodiment, two) indoor units 4 and 5 serving as utilization units that are connected in parallel to the outdoor unit 2, and a liquid refrigerant communication pipe 6 and a gas refrigerant communication pipe 7 serving as refrigerant communication pipes that interconnect the outdoor unit 2 and the indoor units 4 and 5.

That is, a vapor compression refrigerant circuit 10 of the air conditioner 1 of the present embodiment is configured as a result of the outdoor unit 2, the indoor units 4 and 5, and the liquid refrigerant communication pipe 6 and the gas refrigerant communication pipe 7 being connected.

### <Indoor Units>

The indoor units 4 and 5 are installed such as by being embedded in or hung from a ceiling inside the room in the building or the like or by being mounted on a wall surface inside the room. The indoor units 4 and 5 are connected to the outdoor unit 2 via the liquid refrigerant communication pipe 6 and the gas refrigerant communication pipe 7 and configure part of the refrigerant circuit 10.

Next, the configuration of the indoor units 4 and 5 will be described.

It will be noted that only the configuration of the indoor unit 4 will be described here because the indoor unit 4 and the indoor unit 5 have the same configuration. In regard to the configuration of the indoor unit 5, reference numerals in the 50s will be used instead of reference numerals in the 40s representing each part of the indoor unit 4, and description of each part will be omitted.

The indoor unit 4 mainly has an indoor refrigerant circuit 10a (in the indoor unit 5, an indoor refrigerant circuit 10b) that configures part of the refrigerant circuit 10. The indoor refrigerant circuit 10a mainly has an indoor expansion valve 41 serving as an expansion mechanism and an indoor heat exchanger 42 serving as a utilization heat exchanger.

In the present embodiment, the indoor expansion valve 41 is a motor-driven expansion valve that is connected to a liquid side of the indoor heat exchanger 42 in order to conduct control and the like of the flow rate of the refrigerant flowing through the inside of the indoor refrigerant circuit 10a.

In the present embodiment, the indoor heat exchanger 42 is a cross-fin type fin-and-tube heat exchanger having heat transfer tubes and numerous fins and is a heat exchanger that functions as an evaporator of the refrigerant during cooling operation to cool the indoor air and functions as a condenser of the refrigerant during heating operation to heat the indoor air.

In the present embodiment, the indoor unit 4 has an indoor fan 43 serving as a blowing fan for sucking the indoor air into the inside of the unit, causing heat to be exchanged with the refrigerant in the indoor heat exchanger 42, and thereafter supplying the air to the inside of the room as supply air. The indoor fan 43 is a fan that is capable of varying an air volume Wr of the air it supplies to the indoor heat exchanger 42. In the present embodiment, the indoor fan 43 is a centrifugal fan or a multiblade fan or the like that is driven by a motor 43a comprising a DC fan motor.

Further, various types of sensors are disposed in the indoor unit 4. A liquid side temperature sensor 44 that detects the temperature of the refrigerant (i.e., the temperature of the refrigerant corresponding to a condensation temperature during heating operation or an evaporation temperature during cooling operation) is disposed on the liquid side of the indoor heat exchanger 42. A gas side temperature sensor 45 that detects the temperature of the refrigerant is disposed on a gas side of the indoor heat exchanger 42. An indoor temperature sensor 46 that detects the temperature of the indoor air (that is, the indoor temperature) flowing into the inside of the unit is disposed on an indoor air suction port side of the indoor unit 4. In the present embodiment, the liquid side temperature sensor 44, the gas side temperature sensor 45 and the indoor temperature sensor 46 comprise thermistors. Further, the indoor unit 4 has an indoor controller 47 that controls the operation of each part configuring the indoor unit 4. Additionally, the indoor controller 47 has a microcomputer and a memory and the like that are disposed in order to control the indoor unit 4, and the indoor controller 47 is configured such that it can exchange control signals and the like with a remote controller (not shown) for individually operating the indoor unit 4 and can exchange control signals and the like with the outdoor unit 2 via a transmission line 8a.

### <Outdoor Unit>

The outdoor unit 2 is installed on a roof or the like of the building or the like, is connected to the indoor units 4 and 5 via the liquid refrigerant communication pipe 6 and the gas refrigerant communication pipe 7, and configures the refrigerant circuit 10 together with the indoor units 4 and 5.

Next, the configuration of the outdoor unit 2 will be described.

The outdoor unit 2 is mainly equipped with an outdoor refrigerant circuit 10c that configures part of the refrigerant circuit 10. The outdoor refrigerant circuit 10c mainly has a compressor 21, a four-way switching valve 22, an outdoor heat exchanger 23 serving as a heat source heat exchanger, an outdoor expansion valve 38 serving as an expansion mechanism, an accumulator 24, a liquid stop valve 26 and a gas stop valve 27.

The compressor 21 is a compressor that is capable of varying its operating capacity. In the present embodiment, the compressor 21 is a positive displacement compressor that is driven by a motor 21a whose number of rotations is controlled by an inverter. In the present embodiment, there is only one compressor 21, but the embodiment is not limited to this; two or more compressors may also be connected in parallel depending on the connection number of the indoor units and the like.

The four-way switching valve 22 is a valve for switching the direction of the flow of the refrigerant such that, during cooling operation, the four-way switching valve 22 is capable of interconnecting a discharge side of the compressor 21 and a gas side of the outdoor heat exchanger 23 and also interconnecting a suction side of the compressor 21 (specifically, the accumulator 24) and the gas refrigerant communication pipe 7 (see the solid lines of the four-way switching valve 22 in FIG 1) to cause the outdoor heat exchanger 23 to function as a condenser of the refrigerant that is compressed by the compressor 21 and to cause the indoor heat exchangers 42 and 52 to function as evaporators of the refrigerant that is condensed in the outdoor heat exchanger 23, and such that, during heating operation, the four-way switching valve22 is capable of interconnecting the discharge side of the compressor 21 and the gas refrigerant communication pipe 7 and also interconnecting the suction side of the compressor 21 and the gas side of the outdoor heat exchanger 23 (see the dotted lines of the four-way switching valve 22 in FIG 1) to cause the indoor heat exchangers 42 and 52 to function as condensers of the refrigerant that is compressed by the compressor 21 and to cause the outdoor heat exchanger 23 to function as an evaporator of the refrigerant that is condensed in the indoor heat exchangers 42 and 52.

In the present embodiment, the outdoor heat exchanger 23 is a cross-fin type fin-and-tube heat exchanger having heat transfer tubes and numerous fins and is a heat exchanger that functions as a condenser of the refrigerant during cooling operation and as an evaporator of the refrigerant during heating operation. The gas side of the outdoor heat exchanger 23 is connected to the four-way switching valve 22, and a liquid side of the outdoor heat exchanger 23 is connected to the liquid refrigerant communication pipe 6.

In the present embodiment, the outdoor expansion valve 38 is a motor-driven expansion valve that is connected to the liquid side of the outdoor heat exchanger 23 in order to control the pressure and flow rate and the like of the refrigerant flowing through the inside of the outdoor refrigerant circuit 10c.

In the present embodiment, the outdoor unit 2 has an outdoor fan 28 serving as a blowing fan for sucking outdoor air into the inside of the unit, causing heat to be exchanged with the refrigerant in the outdoor heat exchanger 23, and thereafter discharging the air to the outside of the room. The outdoor fan 28 is a fan that is capable of varying an air volume Wo of the air it supplies to the outdoor heat exchanger 23. In the present embodiment, the outdoor fan 28 is a propeller fan and the like that is driven by a motor 28a comprising a DC fan motor.

The accumulator 24 is connected between the four-way valve 22 and the compressor 21 and is a container that is capable of storing surplus refrigerant generated inside the refrigerant circuit 10 depending on fluctuations and the like in the operating loads of the indoor units 4 and 5.

The liquid stop valve 26 and the gas stop valve 27 are valves disposed in openings to which external devices/pipes (specifically, the liquid refrigerant communication pipe 6 and the gas refrigerant communication pipe 7) connect. The liquid stop valve 26 is connected to the outdoor heat exchanger 23. The gas stop valve 27 is connected to the four-way switching valve 22.

Further, various types of sensors are disposed in the outdoor unit 2.

Specifically, a suction pressure sensor 29 that detects the suction pressure of the compressor 21, a discharge pressure sensor 30 that detects the discharge pressure of the compressor 21, a downstream temperature sensor 92 serving as a suction temperature sensor that detects the suction temperature of the compressor 21 and a discharge temperature sensor 32 that detects the discharge temperature of the compressor 21 are disposed in the outdoor unit 2. The downstream temperature sensor 92 is disposed in a position between the accumulator 24 and the compressor 21. A heat exchange temperature sensor 33 that detects the temperature of the refrigerant flowing through the inside of the outdoor heat exchanger 23 (i.e., the temperature of the refrigerant corresponding to a condensation temperature during cooling operation or an evaporation temperature during heating operation) is disposed in the outdoor heat exchanger 23. A liquid side temperature sensor 34 that detects the temperature of the refrigerant is disposed on the liquid side of the outdoor heat exchanger 23. A liquid pipe temperature sensor 35 that detects the temperature of the refrigerant (i.e., the temperature of the liquid pipe) is disposed in front of the liquid stop valve 26. An outdoor temperature sensor 36 that detects the temperature of the outdoor air (i.e., the outdoor temperature) flowing into the inside of the unit is disposed on an outdoor air suction port side of the outdoor unit 2.

It will be noted that, in the present embodiment, the discharge temperature sensor 32, the heat exchange temperature sensor 33, the liquid side temperature sensor 34, the liquid pipe temperature sensor 35 and the outdoor temperature sensor 36 comprise thermistors.

Further, the outdoor unit 2 has an outdoor controller 37 that controls the operation of each part configuring the outdoor unit 2. Additionally, the outdoor controller 37 has a microcomputer and a memory that are disposed in order to control the outdoor unit 2 and an inverter circuit that controls the motor 21a and the like, and the outdoor controller 37 is configured such that it can exchange control signals and the like via the transmission line 8a with the indoor controllers 47 and 57 of the indoor units 4 and 5. That is, a controller 8 that controls operation of the entire air conditioner 1 is configured by the indoor controllers 47 and 57, the outdoor controller 37 and the transmission line 8a that interconnects the indoor controllers 47, 57 and the outdoor controller 37. It will be noted that, as the memory here, an arrangement position memory 80 in which each of the arrangement positions of a later-described first Y-shaped pipe 65, second Y-shaped pipe 66 and third Y-shaped pipe 67 inside a heat exchange component 60 (e.g., information representing in which positions between inlets/outlets S1 to S4 and an inlet/outlet G of the heat exchange component 60 the Y-shaped pipes are arranged) are stored in advance is disposed.

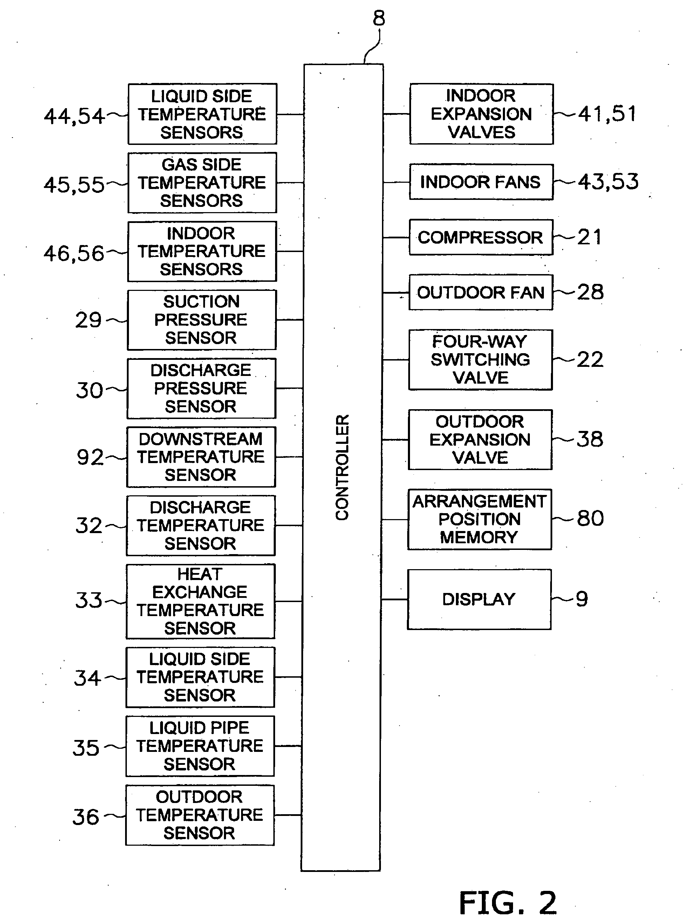

The controller 8 is, as shown in FIG 2, which is a control block diagram of the air conditioner 1, connected such that it can receive detection signals of the various types of sensors 29 to 36, 44 to 46, 54 to 56, 63 and 92 and is connected such that it can control the various types of devices and valves 22, 24, 28a, 38, 41, 43a, 51 and 53a on the basis of these detection signals and the like.

### <Refrigerant Communication Pipes>

The refrigerant communication pipes 6 and 7 are refrigerant pipes that are installed on site when installing the air conditioner 1 in an installation location such as the building, and pipes having various lengths and pipe diameters are used depending on installation conditions such as the installation location and the combination of outdoor units and indoor units.

The air conditioner 1 of the present embodiment is configured to switch and operate between cooling operation and heating operation with the four-way switch valve 22 and also to control, with the controller 8 configured by the indoor controllers 47 and 57 and the outdoor controller 37, each device of the outdoor unit 2 and the indoor units 4 and 5 in accordance with the operating loads of each of the indoor units 4 and 5.

### <General Configuration of Indoor Heat Exchanger 42, Indoor Heat Exchanger 52 and Outdoor Heat Exchanger 23>

The indoor heat exchanger 42, the indoor heat exchanger 52 and the outdoor heat exchanger 23 all have the same configuration in which the embodiment of the present invention is employed.

The indoor heat exchanger 42 will be taken as an example and described below, but description of both the other indoor heat exchanger 52 and the outdoor heat exchanger 23 will be omitted because they have the same configuration as that of the indoor heat exchanger 42.

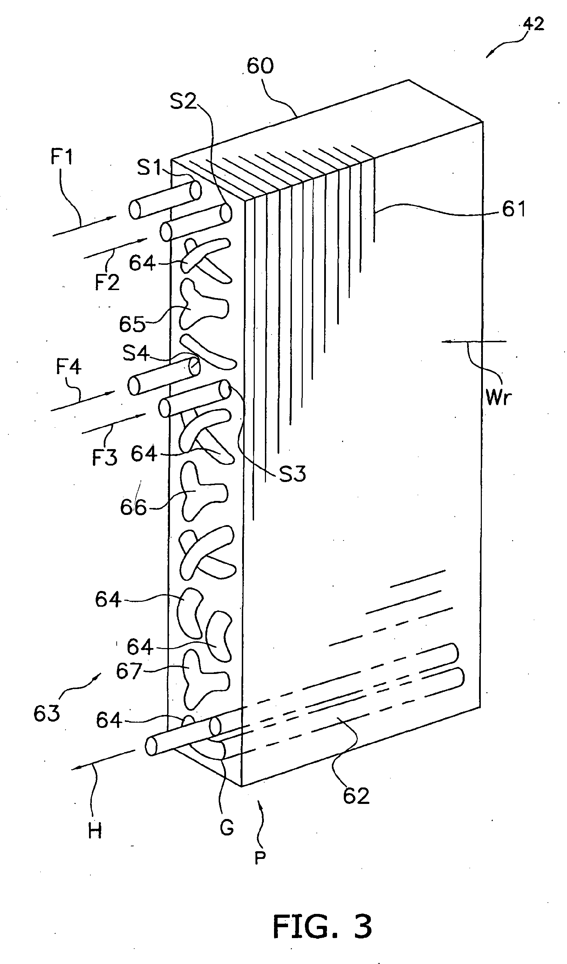

The indoor heat exchanger 42 is, as shown in FIG 3, equipped with a heat exchange component 60 and a pipe P.

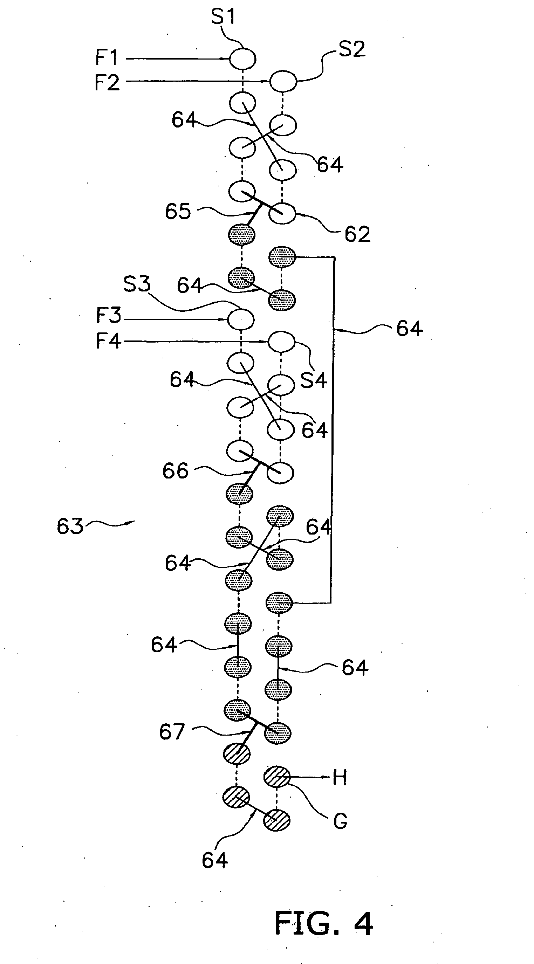

The heat exchange component 60 is configured as a shape where plural fins 61 are arranged side-by-side in a plate thickness direction and where plural heat transfer tubes 62 penetrate the side-by-side plural fins 61 in the plate thickness direction. The heat exchange component 60 has, as shown in FIG. 3 and FIG. 4, four second inlets/outlets S1 to S4 with respect to one first inlet/outlet G Here, when the indoor heat exchanger 42 functions as a condenser of the refrigerant, the four second inlets/outlets S1 to S4 become inlets for the refrigerant in a gas state respectively and the one first inlet/outlet G becomes an outlet for the refrigerant in a liquid state. Further, when the indoor heat exchanger 42 functions as an evaporator of the refrigerant, the one first inlet/outlet G becomes an inlet for the refrigerant in a liquid state and the four second inlets/outlets S1 to S4 become outlets for the refrigerant in a gas state. The case where the indoor heat exchanger 42 functions as a condenser of the refrigerant will be taken as an example and described below.

The pipe P includes the plural heat transfer tubes 62 and a connecting portion 63, and the inner diameters of all the heat transfer tubes 62 are 7.36 mm and equal. The heat transfer tubes 62 penetrate, from the plate thickness direction, the plural fins 61, which are arranged side-by-side in the plate thickness direction and configure the heat exchange component 60 as described above. In the indoor heat exchanger 42 of the present embodiment, the heat transfer tubes 62 are disposed side-by-side in two rows spaced evenly apart in a longitudinal direction of the fins 61 when seen from the plate thickness direction of the fins 61, and the heat transfer tubes 62 are arranged such that the heat transfer tubes 62 of each row appear to cross each other when seen from a horizontal direction. Both end portions of the heat transfer tubes 62 are disposed such that they are respectively exposed on both near side and far side of the fins 61 of the heat exchange component 60 in the plate thickness direction. The connecting portion 63 is attached from the outside with respect to the exposed portions of the heat transfer tubes 62.

In the connecting portion 63, as shown in FIG 3 and FIG 4, there are a plurality of U-shaped pipes 64 and Y-shaped pipes 65, 66 and 67.

One of the plurality of U-shaped pipes 64 connect on a one-to-one basis one of the above-described heat transfer tubes 62 that are exposed from the heat exchange component 60 and one of the heat transfer tubes 62 that are exposed in the same direction (e.g., near side and near side, far side and far side) and adjacent thereto. Thus, two of the heat transfer tubes 62 that are interconnected by the one of the plurality of U-shaped pipes 64 configure one tube overall, and the flow direction of the refrigerant flowing through one of the heat transfer tubes 62 before passing through the one of the plurality of U-shaped pipes 64 and the flow direction of the refrigerant flowing through the other of the heat transfer tubes 62 after passing through the one of the plurality of U-shaped pipes 64 are opposite. It will be noted that the one of the plurality of U-shaped pipes 64 exist in plural positions as pipes that interconnect on a one-to-one basis the heat transfer tubes 62 that are exposed from the heat exchange component 60, and, as shown in FIG 3, the plurality of U-shaped pipes 64 exist not just on the near side of the fins 61 of the heat exchange component 60 in the thickness direction but also on the far side of the fins 61 of the heat exchange component 60.

The Y-shaped pipes 65, 66 and 67 include a first Y-shaped pipe 65, a second Y-shaped pipe 66 and a third Y-shaped pipe 67.

The first Y-shaped pipe 65, as shown in FIG 3 and FIG 4, interconnects in a two-to-one ratio two of the heat transfer tubes 62 that are exposed from the heat exchange component 60 and adjacent and one of the heat transfer tubes 62 that is exposed in the same direction (e.g., near side and near side, far side and far side) and is located in a position adjacent to the above-described two heat transfer tubes 62. Specifically, the first Y-shaped pipe 65 causes refrigerant flows F1 and F2 flowing in from the second inlets/outlets S1 and S2 of the heat exchange component 60 to merge together and guides the merged refrigerant flow to the one of the heat exchange tubes 62. Additionally, the flow direction of the refrigerant flowing through the two heat transfer tubes 62 before passing through the first Y-shaped pipe 65 and the flow direction of the refrigerant flowing through the one of the heat transfer tubes 62 after passing through the first Y-shaped pipe 65 are opposite.

The second Y-shaped pipe 66 is the same as the first Y-shaped pipe 65 and, as shown in FIG 3 and FIG 4, interconnects in a two-to-one ratio two of the heat transfer tubes 62 that are exposed from the heat exchange component 60 and adjacent and one of the heat transfer tubes 62 that is exposed in the same direction and is located in a position adjacent to both of the above-described two heat transfer tubes 62. Specifically, the second Y-shaped pipe 66 causes refrigerant flows F3 and F4 flowing in from the second inlets/outlets S3 and S4 of the heat exchange component 60 to merge together and guides the merged refrigerant flow to the one of the heat exchange tubes 62. Additionally, the flow direction of the refrigerant flowing through the two heat transfer tubes 62 before passing through the second Y-shaped pipe 66 and the flow direction of the refrigerant flowing through the one of the heat transfer tubes 62 after passing through the second Y-shaped pipe 66 are opposite.

The third Y-shaped pipe 67, as shown in FIG 3 and FIG 4, interconnects in a two-to-one ratio two of the heat transfer tubes 62 that are exposed from the heat exchange component 60 and adjacent and one of the heat transfer tubes 62 that is exposed in the same direction and is located in a position adjacent to both of the above-described two heat transfer tubes 62. Specifically, the third Y-shaped pipe 67 causes the refrigerant flows flowing in from the second inlets/outlets S1 and S2 of the heat exchange component 60 and merging together in the first Y-shaped pipe 65 and the refrigerant flows flowing in from the second inlets/outlets S3 and S4 of the heat exchange component 60 and merging together in the second Y-shaped pipe 66 to further merge together and guides the merged refrigerant flow to the one of the heat transfer tubes 62. Additionally, the flow direction of the refrigerant flowing through the two heat transfer tubes 62 before passing through the third Y-shaped pipe 67 and the flow direction of the refrigerant flowing through the one of the heat transfer tubes 62 after passing through the third Y-shaped pipe 67 are opposite.

### (Arrangement of Y Shaped Pipes 65, 66 and 67 in Heat Exchange Component 60)

As mentioned above, the refrigerant pipes that pass through the heat exchange component 60 merge together in the first Y-shaped pipe 65, the second Y-shaped pipe 66 and the third Y-shaped pipe 67 (when the indoor heat exchanger 42 functions as an evaporator of the refrigerant, the flow of the refrigerant becomes opposite and diverges). For this reason, the four refrigerant flows F1 to F4 respectively flowing into the second inlets/outlets S1 to S4 of the heat exchange component 60 merge together in the first Y-shaped pipe 65 and the second Y-shaped pipe 66 respectively to become two refrigerant flows. Then, the two refrigerant flows into which the four refrigerant flows have merged together further merge together in the third Y-shaped pipe 67 to become one refrigerant flow H, and the one refrigerant flow H flows out from the first inlet/outlet G of the heat exchange component 60.

Here, the first Y-shaped pipe 65 and the second Y-shaped pipe 66 have roles as positions where two refrigerant flows are caused to merge together, and the third Y-shaped pipe 67 has a role as a position where refrigerant flows that have been merged together are further caused to merge together.

Additionally, in the indoor heat exchanger 42 of the present embodiment, the arrangement of the first Y-shaped pipe 65, the second Y-shaped pipe 66 and the third Y shaped pipe 67 that have the above-described roles is provided such that the refrigerant flowing through the pipes passing through the inside of the heat exchange component 60 changes into the different states of a gas phase state, a gas-liquid two-phase state and a liquid phase state before and after the Y-shaped pipes 65, 66 and 67.

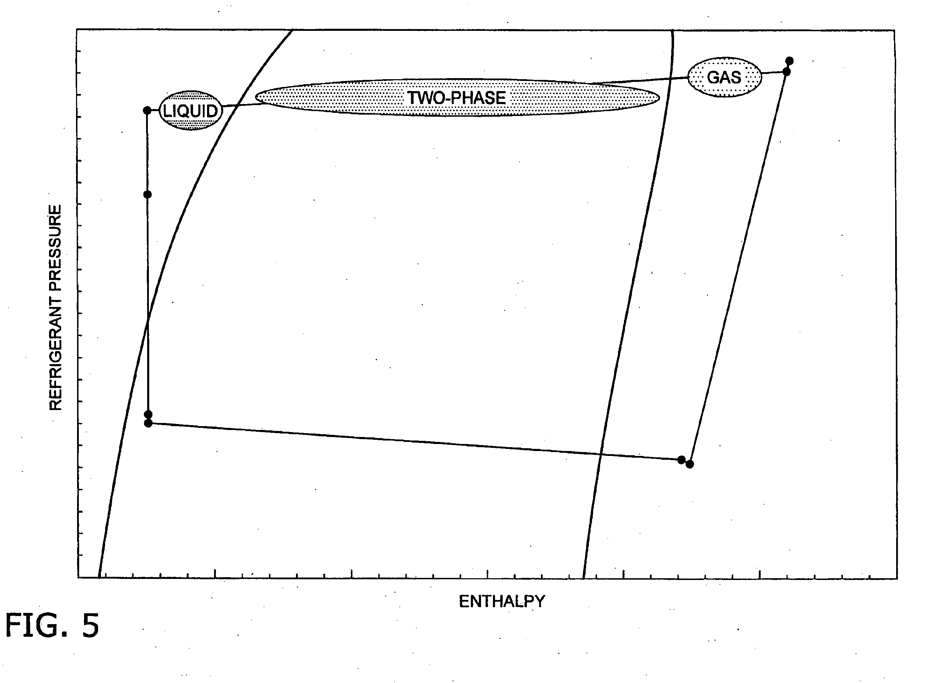

Specifically, when the indoor heat exchanger 42 functions as a condenser of the refrigerant, in the Mollier diagram shown in FIG 5, the refrigerant in a high-pressure gas phase state flows into the second inlets/outlets S1 to S4 of the heat exchange component 60, passes through a gas-liquid two-phase state, becomes refrigerant in a high-pressure liquid phase state, and flows out from the first inlet/outlet G of the heat exchange component 60.

Here, in the Mollier diagram of FIG 5, when passing intersection points between a high-pressure line and a saturated vapor line in the direction in which enthalpy drops, some of the refrigerant in the gas phase state liquefies and becomes refrigerant in the gas-liquid two-phase state, so in correspondence to this, the first Y-shaped pipe 65 and the second Y-shaped pipe 66 are positioned in boundary portions of the refrigerant pipes passing through the heat exchange component 60 where the refrigerant changes from refrigerant in the gas phase state to refrigerant in the gas-liquid two-phase state. Thus, the four refrigerant flows F1 to F4 become two refrigerant flows. Thus, the fact that some of the refrigerant in the gas phase state liquefies and the volume of the refrigerant decreases corresponds to the fact that the passage area decreases to half because of merging because the inner diameters of the heat transfer tubes 62 are all equal.

Moreover, in the Mollier diagram of FIG 5, when passing intersection points between a high-pressure line and a saturated vapor line in the direction in which enthalpy drops, the refrigerant in the gas-liquid two-phase state completely liquefies and becomes refrigerant in the liquid phase state, so in correspondence to this, the third Y-shaped pipe 67 is positioned in a boundary portion of the refrigerant pipes passing through the heat exchange component 60 where the refrigerant changes from refrigerant in the gas-liquid two-phase state to refrigerant in the liquid phase state. Thus, the two refrigerant flows that have been merged together in the first Y-shaped pipe 65 and the second Y-shaped pipe 66 become one refrigerant flow. For reason, the fact that all the refrigerant in the gas-liquid two-phase state changes state to refrigerant in the liquid phase state and the volume of the refrigerant decreases corresponds to the fact that the passage area decreases to half because the inner diameters of the heat transfer tubes 62 are all equal.

The indoor heat exchanger 42 has been described above, but the same is also true in regard to the indoor heat exchanger 52 and the outdoor heat exchanger 23.

As described above, the indoor heat exchanger 42 is configured such that the first Y-shaped pipe 65 and the second Y-shaped pipe 66 are positioned near the boundaries in the refrigerant distribution between the refrigerant in the gas phase state and the refrigerant in the gas-liquid two-phase state and is configured such that the third Y-shaped pipe 67 is positioned near the boundary in the refrigerant distribution between the refrigerant in the gas-liquid two-phase state and the refrigerant in the liquid phase state.

### (State Change Position Control)

With the indoor heat exchanger 42 of the above configuration, the controller 8 performs operation control such that the branching portions can be positioned respectively in the boundary between the refrigerant in the gas phase state and the refrigerant in the gas-liquid two-phase state and the boundary between the refrigerant in the gas-liquid two-phase state and the refrigerant in the liquid phase state. That is, here, not just is there a correspondence to the refrigerant distribution resulting from the structures of the heat exchangers 42, 52 and 23, but moreover various types of control are performed by the control of the controller 8 such that, when the air conditioner 1 performs air-conditioning operation, the transitions of the state changes in the refrigerant actually flowing inside the pipes (the transition from the gas phase state to the gas-liquid two-phase state, the transition from the gas-liquid two-phase state to the liquid phase state) are realized in the positions of the first Y-shaped pipe 65, the second Y-shaped pipe 66 and the third Y-shaped pipe 67.

Here, the controller 8 references data in the arrangement position memory 80, in which arrangement data representing the positions of the first Y-shaped pipe 65, the second Y-shaped pipe 66 and the third Y-shaped pipe 67 between the second inlets/outlets S1 to S4 and the first inlet/outlet G in the heat exchange component 60 are stored in advance, and performs the control below.

For example, the controller 8 controls the heat exchange capability (condensation capability, evaporation capability) in the outdoor heat exchanger 23 by referencing the data in the arrangement position memory 80 in which the arrangement data of each of the Y-shaped pipes 65, 66 and 67 are stored in advance and controlling the number of rotations of the fan motor 28a of the outdoor fan 28 and controlling the air volume in accordance with values that the outdoor temperature sensor 36, the discharge temperature sensor 32, the heat exchange temperature sensor 33, the liquid side temperature sensor 34 and the like detect. Thus, the controller 8 can create a state where the transitions of the state changes in the refrigerant are realized in the positions of the first Y-shaped pipe 65, the second Y-shaped pipe 66 and the third Y-shaped pipe 67. Thus, the controller 8 can improve the heat exchange efficiency of the heat exchangers 42, 52 and 23.

Similarly, the controller 8 controls the heat exchange capability (evaporation capability, condensation capability) in the indoor heat exchanger 42 (the indoor heat exchanger 52) by referencing the data in the arrangement position memory 80 in which the arrangement data of each of the Y-shaped pipes 65, 66 and 67 are stored in advance and controlling the number of rotations of the indoor fan motor 43a (the indoor fan motor 53a) of the indoor fan 43 (the indoor fan 53) and controlling the air volume in accordance with values that the liquid side temperature sensor 44 (the liquid side temperature sensor 54) and the gas side temperature sensor 45 (the gas side temperature sensor 55) detect. Thus, the controller 8 can also create a state where the transitions of the state changes in the refrigerant are realized in the positions of the first Y-shaped pipe 65, the second Y-shaped pipe 66 and the third Y-shaped pipe 67.

Moreover, the controller 8 can control the flow rate of the refrigerant, for example, by referencing the data in the arrangement position memory 80 in which the arrangement data of each of the Y-shaped pipes 65, 66 and 67 are stored in advance and controlling the frequency of the motor 21a of the compressor 21 in accordance with values that the suction pressure sensor 29 and the discharge pressure sensor 30 detect. Thus, the controller 8 can also create a state where the transitions of the state changes in the refrigerant are realized in the positions of the first Y-shaped pipe 65, the second Y-shaped pipe 66 and the third Y-shaped pipe 67.

It will be noted that the controller 8 may perform the aforementioned control of the outdoor fan motor 28a of the outdoor fan 28 in the outdoor heat exchanger 23, control of the indoor fan motors 43a and 53a of the indoor fans 43 and 53 in the indoor heat exchangers 42 and 52 and control of the frequency of the motor 21a of the compressor 21 independently or at the same time.

As described above, in a state where the transitions of the state changes in the refrigerant are occurring in the positions of the first Y-shaped pipe 65, the second Y-shaped pipe 66 and the third Y-shaped pipe 67, for example, refrigerant with a density of 99.2 kg/m³ passes at a flow velocity of 1.2 m/s in the second inlets/outlets S1 to S4 for the refrigerant in the gas state of the heat exchangers 23,42 and 52, and refrigerant with a density of 987.4 kg/m³ passes at a flow velocity of 0.50 m/s in the first inlet/outlet G for the refrigerant in the liquid state.

### <Characteristics of Heat Exchanger Pertaining to Present Embodiment>

### (1)

In the heat exchangers 23, 42 and 52 of the present embodiment, the state of the refrigerant changes inside the heat exchange component 60 from the gas phase state to the gas-liquid two-phase state and from the gas-liquid two-phase state to the liquid phase state because of the operation of the air conditioner 1. Additionally, the branching positions of the refrigerant pipes inside the heat exchange component 60 respectively correspond to positions where the phase state of the refrigerant changes. In this manner, the portion where the refrigerant in the gas phase state flows, the portion where the refrigerant in the gas-liquid two-phase state flows and the portion where the refrigerant in the liquid phase state flows are clearly divided by the branching portions.

For this reason, in the refrigerant circuit, by arranging the pipes such that the side of the heat exchangers 23, 42 and 52 where the number of pipes is small is the liquid phase side, the flow velocity of the refrigerant on the liquid phase side can be increased. Additionally, in the refrigerant circuit, by making the side of the heat exchangers 23, 42 and 52 where the number of pipes is large the gas phase side, pressure loss of the refrigerant on the gas phase side can be controlled. Thus, in the heat exchangers 23, 42 and 52, heat exchange corresponding to the phase changes in the refrigerant can be executed and heat exchange efficiency can be improved. That is, in the heat exchangers 23, 42 and 52, the number of pipes through which the refrigerant in the gas state flows can be increased, the flow velocity of the refrigerant in the gas state can be decreased, and pressure loss can be reduced.

Here, the difference between the temperature of the refrigerant inside the heat exchangers 23, 42 and 52 and the temperature of the air outside the heat exchangers 23, 42 and 52 is larger with the refrigerant in the gas state than with the refrigerant in the liquid state. For this reason, even when the heat exchanger is given a configuration where the number of pipes is increased to lower the flow velocity of the refrigerant, heat exchange efficiency can be ensured. Additionally, in the heat exchangers 23, 42 and 52, the flow velocity of the refrigerant in the liquid state can be increased and the efficiency of heat exchange can be made greater by reducing the number of pipes through which the refrigerant in the liquid state flows. That is, the difference between the temperature of the refrigerant inside the heat exchangers 23, 42 and 52 and the temperature of the air outside the heat exchangers 23, 42 and 52 is smaller in the portion through which the refrigerant in the liquid state flows than in the portion through which the refrigerant in the gas state flows. For this reason, a drop in heat exchange efficiency can be prevented by raising the flow velocity of the refrigerant in the liquid state. As described above, effective utilization is achieved by employing a pipe distribution corresponding to the refrigerant states inside the heat exchangers 23, 42 and 52.

Further, when manufacturing such a heat exchanger having branching structures that improve heat exchange efficiency, in the heat exchange component 60 that is configured as a result of the plural fins 61 being stacked in the thickness direction and the plural heat transfer tubes 62 penetrating each of the fins 61, the plurality of U-shaped pipes 64, the first Y-shaped pipe 65, the second Y-shaped pipe 66 and the third Y-shaped pipe 67 can be simply attached from the outside of the heat exchange component 60 respectively with respect to the end portions of the heat transfer tubes 62 that extend from the end portions of the fins 61 in the thickness direction. Thus, the heat exchangers 23,42 and 52 that improve heat exchange efficiency can be easily manufactured.

Further, the inner diameters of all of the heat transfer tubes 62, the plurality of U-shaped pipes 64, the first Y-shaped pipe 65, the second Y-shaped pipe 66 and the third Y-shaped pipe 67 are equal to each other, and it suffices to mass-produce the same product. For this reason, manufacturing costs can be reduced. Further, manufacturing costs can be controlled in comparison to manufacturing a heat exchanger where the inner diameters of the heat transfer tubes 62 are different.

### (2)

In the heat exchangers 23, 42 and 52 of the present embodiment, just by disposing, in two stages, structures that cause branching by the first Y-shaped pipe 65 and the second Y-shaped pipe 66 and by the third Y-shaped pipe 67, pipe numbers corresponding to each state of the gas phase state, the gas-liquid two-phase state and the liquid phase state can be realized, so heat exchange efficiency can be effectively improved even with a simplified structure where there are branching structures in only two places.

### (3)

In the heat exchangers 23, 42 and 52 of the present embodiment, it becomes possible to cause the refrigerant to pass through the heat exchange component 60 in regard to both before and after the branches and to ensure more heat-exchangeable portions not just by causing the refrigerant to branch in the first Y-shaped pipe 65, the second Y-shaped pipe 66 and the third Y-shaped pipe 67 but also by inverting the refrigerant flows before and after the branches. Thus, heat exchange efficiency can be improved even more.

Moreover, when the first Y-shaped pipe 65, the second Y-shaped pipe 66 and the third Y-shaped pipe 67 that have such a branching function and a refrigerant flow inverting function are to be attached with respect to the heat exchange component 60, it is possible to directly attach them from the outside of the heat exchange component 60 with respect to the heat transfer tubes 62 that extend from the end portions of the heat exchange component 60, so manufacturing a heat exchanger that realizes these functions becomes easy.

### (4)

In the heat exchangers 23, 42 and 52 of the present embodiment, each pipe that is caused to branch by the first Y-shaped pipe 65 is further caused to branch in the second Y-shaped pipe 66 and the third Y-shaped pipe 67 respectively. Thus, it becomes possible to equalize the state of the refrigerant in accordance with the pipe positions, and heat exchange efficiency can be improved more.

### <Modifications>

An embodiment of the present invention has been described above on the basis of the drawings, but the specific configurations are not limited to the embodiment, and changes may be made as described below without departing from the scope of the invention.

### (A)

In these heat exchangers 23, 42 and 52 of the preceding embodiment, a case where the first Y-shaped pipe 65, the second Y-shaped pipe 66 and the third Y-shaped pipe 67 are disposed in the same direction with respect to the thickness direction of the fins 61 of the heat exchange component 60 has been taken as an example and described.

However, the present invention is not limited to this and may also have a configuration where any two of the first Y-shaped pipe 65, the second Y-shaped pipe 66 and the third Y-shaped pipe 67 are disposed on one side in the thickness direction of the fins 61 of the heat exchange component 60 and where the remaining one is disposed on the other side in the thickness direction of the fins 61 of the heat exchange component 60.

### (B)

In the heat exchangers 23, 42 and 52 of the preceding embodiment, a case where the pipe goes from one to two before and after the third Y-shaped pipe 67 and where the pipes go from two to four before and after the first Y-shaped pipe 65 and the second Y-shaped pipe 66 has been taken as an example and described.

However, the present invention is not limited to this and may also be given a configuration, for example, that does not have either one of the aforementioned first Y-shaped pipe 65 and the second Y-shaped pipe 66. That is, for example, the present invention may also have a configuration where the pipe goes from one to two before and after the third Y-shaped pipe 67 and where the pipes go from two to three before and after the first Y-shaped pipe 65. Even in this case, the effect of improving heat exchange efficiency corresponding to the state of the refrigerant is obtained in regard to pipes that branch at least two times.

### (C)

In the heat exchangers 23, 42 and 52 of the preceding embodiment, a case where the heat exchanger functions as a condenser of the refrigerant has been taken as an example and described.

However, the present invention is not limited to this and may also be configured such that the heat exchanger in which the configuration of the preceding embodiment is employed is caused to function as an evaporator of the refrigerant. In this case, the heat exchanger can be configured such that, for example, the refrigerant in the liquid state is caused to flow in from the first inlet/outlet G, the pipe goes from one to two before and after the third Y-shaped pipe 67, the refrigerant in the gas-liquid two-phase state is caused to pass therethrough, the two pipes become four before and after the first Y-shaped pipe 65 and the second Y-shaped pipe 66, the refrigerant in the gas phase is caused to pass therethrough, and the refrigerant that has changed into the gas state is caused to flow out from each of the second inlets/outlets S1 to S4. Even in this case, in the heat exchangers 23, 42 and 52, heat exchange corresponding to phase changes in the refrigerant can be executed and heat exchange efficiency can be improved.

### INDUSTRIAL APPLICABILITY

By utilizing the present invention, heat exchange efficiency can be improved in correspondence to changes in the phase of refrigerant, so the present invention is particularly useful when applied to a heat exchanger and an air conditioner inside of which refrigerant flows while changing its state.

## Claims

1. An air conditioner (1) comprising:
∘ a heat exchanger (42, 52, 23) that causes refrigerant to pass therethrough while changing the state of the refrigerant, the heat exchanger comprising:
∘ a plurality of fins (61) that are arranged side-by-side in a plate thickness direction; and
∘ a pipe (P) that penetrates the plurality of fins (61) from the plate thickness direction and branches at least two times such that the number of pipes through which the refrigerant passes increases between a first inlet/outlet (G) and second inlets/outlets (S1 to S4) of a fin group (60) comprising the plurality of fins (61), wherein the pipe (P) branches just two times between the first inlet/outlet (G) and the second inlets/outlets (S1 to S4),
∘ a fan (28, 28a, 43, 43a, 53, 53a) that supplies a flow of air to the heat exchanger (42, 52, 23);
**characterized in that** the air conditioner (1) further comprises
∘ a branch memory (80) that stores data relating to branching positions of the pipes in the heat exchanger;
∘ a state quantity detector (32, 33, 34, 36, 44, 55) that detects state quantities of the refrigerant flowing through the pipe (P);
and
∘ a controller (8) that is configured to control the air volume of the fan such that the state of the refrigerant before the branching positions is different from the state of the refrigerant after the branching positions on the basis of values that the state quantity detector has detected and the data stored in the branch memory.

2. An air conditioner (1) comprising:
∘ a heat exchanger (42, 52, 23) that causes refrigerant to pass therethrough while changing the state of the refrigerant, the heat exchanger comprising:
∘ a plurality of fins (61) that are arranged side-by-side in a plate thickness direction; and
∘ a pipe (P) that penetrates the plurality of fins (61) from the plate thickness direction and branches at least two times such that the number of pipes through which the refrigerant passes increases between a first inlet/outlet (G) and second inlets/outlets (S1 to S4) of a fin group (60) comprising the plurality of fins (61), wherein the pipe (P) branches just two times between the first inlet/outlet (G) and the second inlets/outlets (S1 to S4),
∘ a compressor (21, 21a) that controls the flow velocity of the refrigerant supplied to heat exchanger (42, 52, 23) by controlling the frequency of the compressor;
**characterized in that** the air conditioner (1) further comprises
∘ a branch memory (80) that stores data relating to branching positions of the pipes in the heat exchanger;
∘ a state quantity detector (32, 33, 34, 36, 44, 55) that detects state quantities of the refrigerant flowing through the pipe (P);
and
∘ a controller (8) that is configured to control the frequency of the compressor such that the state of the refrigerant before the branching positions is different from the state of the refrigerant after the branching positions on the basis of values that the state quantity detector has detected and the data stored in the branch memory.

3. The air conditioner according to claim 1 or 2, wherein branching portions (65, 66, 67) of the pipe (P) are disposed at least in a portion near a boundary that separates the refrigerant in a liquid phase state from the refrigerant in a gas-liquid two-phase state and a portion near a boundary that separates the refrigerant in the gas-liquid two-phase state from the refrigerant in a gas phase state.

4. The air conditioner according to claim 1, 2 or 3, wherein inner diameters of a plurality of branched pipes (P) are substantially equal to each other.

5. The air conditioner according to any one of claims 1 to 4, wherein branching portions (65, 66, 67) of the pipe (P) have a structure that inverts the direction in which the refrigerant flows.

6. The air conditioner according to any one of claims 1 to 5, wherein the pipe (P) branches such that one pipe becomes two pipes at the first branch and such that two pipes become four pipes at the second branch.

7. The air conditioner according to any one of claims 1 to 6, wherein the pipe (P) branches at positions where the flow velocity of the refrigerant in the second inlets/outlets (S1 to S4) of the fin group (60) with respect to the flow velocity of the refrigerant in the first inlet/outlet (G) of the fin group (60) becomes doubled or more and tripled or less.

## Patentansprüche

1. Klimaanlage (1) mit:
einem Wärmetauscher (42, 52, 23), der Kältemittel dazu veranlasst, durch diesen zu passieren, während er den Zustand des Kältemittels ändert, wobei der Wärmetauscher aufweist:
mehrere Rippen (61), die in einer Platten-Dickenrichtung Seite an Seite angeordnet sind; und
ein Rohr (P), das die mehreren Rippen (61) in der Platten-Dickenrichtung durchdringt und sich zumindest zweimal derart verzweigt, dass die Anzahl an Rohren, durch die das Kältemittel passiert, zwischen einem ersten Einlass/Auslass (G) und zweiten Einlässen/Auslässen (S1 bis S4) einer Rippen-Gruppe (60) mit den mehreren Rippen (61) zunimmt, wobei sich das Rohr (P) zwischen dem ersten Einlass/Auslass (G) und den zweiten Einlässen/Auslässen (S1 bis S4) gerade zweimal verzweigt;
einem Lüfter (28, 28a, 43, 43a, 53, 53a), der dem Wärmetauscher (42, 52, 23) einen Luftstrom zuführt;
**dadurch gekennzeichnet, dass** die Klimaanlage (1) ferner aufweist:
eine Verzweigungs-Speichereinrichtung (80), die Daten hinsichtlich von Verzweigungspositionen der Rohre in dem Wärmetauscher speichert;
eine Zustandsgrößen-Erfassungseinrichtung (32, 33, 34, 36, 44, 55), die Zustandsgrößen des durch das Rohr (P) strömenden Kältemittels erfasst; und
eine Steuereinrichtung (8), die derart ausgelegt ist, dass sie das Luftvolumen des Lüfters auf Grundlage von Werten, welche die Zustandsgrößen-Erfassungseinrichtung erfasst hat, und den in der Verzweigungs-Speichereinrichtung gespeicherten Daten derart steuert, dass sich der Zustand des Kältemittels vor den Verzweigungspositionen von dem Zustand des Kältemittels nach den Verzweigungspositionen unterscheidet.

2. Klimaanlage (1) mit:
einem Wärmetauscher (42, 52, 23), der Kältemittel dazu veranlasst, durch diesen zu passieren, während er den Zustand des Kältemittels ändert, wobei der Wärmetauscher aufweist:
mehrere Rippen (61), die in einer Platten-Dickenrichtung Seite an Seite angeordnet sind; und
ein Rohr (P), das die mehreren Rippen (61) in der Platten-Dickenrichtung durchdringt und sich zumindest zweimal derart verzweigt, dass die Anzahl an Rohren, durch die das Kältemittel passiert, zwischen einem ersten Einlass/Auslass (G) und zweiten Einlässen/Auslässen (S1 bis S4) einer Rippen-Gruppe (60) mit den mehreren Rippen (61) zunimmt, wobei sich das Rohr (P) zwischen dem ersten Einlass/Auslass (G) und den zweiten Einlässen/Auslässen (S1 bis S4) gerade zweimal verzweigt;
einem Kompressor (21, 21a), der die Strömungsgeschwindigkeit des dem Wärmetauscher (42, 52, 23) zugeführten Kältemittels durch Steuern der Kompressorfrequenz steuert;
**dadurch gekennzeichnet, dass** die Klimaanlage (1) ferner aufweist:
eine Verzweigungs-Speichereinrichtung (80), die Daten hinsichtlich von Verzweigungspositionen der Rohre in dem Wärmetauscher speichert;
eine Zustandsgrößen-Erfassungseinrichtung (32, 33, 34, 36, 44, 55), die Zustandsgrößen des durch das Rohr (P) strömenden Kältemittels erfasst; und
eine Steuereinrichtung (8), die derart ausgelegt ist, dass sie die Kompressorfrequenz auf Grundlage von Werten, welche die Zustandsgrößen-Erfassungseinrichtung erfasst hat, und den in der Verzweigungs-Speichereinrichtung gespeicherten Daten derart steuert, dass sich der Zustand des Kältemittels vor den Verzweigungspositionen von dem Zustand des Kältemittels nach den Verzweigungspositionen unterscheidet.

3. Klimaanlage nach Anspruch 1 oder 2, wobei Verzweigungsabschnitte (65, 66, 67) des Rohrs (P) zumindest in einem Abschnitt nahe einer Grenze, die das Kältemittel in einem Flüssigphasen-Zustand von dem Kältemittel in einem Gas-flüssig-Zweiphasen-Zustand trennt, und in einem Abschnitt nahe einer Grenze angeordnet sind, die das Kältemittel in dem Gas-flüssig-Zweiphasen-Zustand von dem Kältemittel in einem Gasphasen-Zustand trennt.

4. Klimaanlage nach Anspruch 1, 2 oder 3, wobei Innendurchmesser von mehreren verzweigten Rohren (P) im Wesentlichen zueinander gleich sind.

5. Klimaanlage nach einem der Ansprüche 1 bis 4, wobei Verzweigungsabschnitte (65, 66, 67) des Rohrs (P) eine Struktur aufweisen, welche die Richtung invertiert, in der das Kältemittel strömt.

6. Klimaanlage nach einem der Ansprüche 1 bis 5, wobei sich das Rohr (P) derart verzweigt, dass an der ersten Verzweigung aus einem Rohr zwei Rohre werden und an der zweiten Verzweigung aus zwei Rohren vier Rohre werden.

7. Klimaanlage nach einem der Ansprüche 1 bis 6, wobei sich das Rohr (P) an Positionen verzweigt, an denen die Strömungsgeschwindigkeit des Kältemittels in den zweiten Einlässen/Auslässen (S1 bis S4) der Rippen-Gruppe (60) bezüglich der Strömungsgeschwindigkeit des Kältemittels in dem ersten Einlass/Auslass (G) der Rippen-Gruppe (60) doppelt so hoch oder höher und dreimal so hoch oder niedriger ist.

## Revendications

1. Climatiseur (1) comprenant :
∘ un échangeur de chaleur (42, 52, 23) qui amène un fluide frigorigène à le traverser tout en changeant l'état du fluide frigorigène, l'échangeur de chaleur comprenant :
• une pluralité d'ailettes (61) qui sont agencées côte-à-côte dans une direction de l'épaisseur de plaque ; et
• un tuyau (P) qui pénètre dans la pluralité d'ailettes (61) à partir de la direction de l'épaisseur de plaque et se ramifie au moins deux fois de sorte que le nombre de tuyaux à travers lesquels le fluide frigorigène passe augmente entre une première entrée/sortie (G) et des deuxièmes entrées/sorties (S1 à S4) d'un groupe d'ailettes (60) comprenant la pluralité d'ailettes (61), où le tuyau (P) se ramifie seulement deux fois entre la première entrée/sortie (G) et les deuxièmes entrées/sorties (S1 à S4),
∘ un ventilateur (28, 28a, 43, 43a, 53, 53a) qui fournit un écoulement d'air vers l'échangeur de chaleur (42, 52, 23) ;
**caractérisé en ce que** le climatiseur (1) comprend en outre
• une mémoire de ramification (80) qui stocke des données relatives à des positions de ramification des tuyaux dans l'échangeur de chaleur ;
• un détecteur de grandeur d'état (32, 33, 34, 36, 44, 55) qui détecte des grandeurs d'état du fluide frigorigène s'écoulant à travers le tuyau (P) ;
• un dispositif de commande (8) qui est configuré pour commander le volume d'air du ventilateur de sorte que l'état du fluide frigorigène avant les positions de ramification soit différent de l'état du fluide frigorigène après les positions de ramification sur la base de valeurs que le détecteur de grandeur d'état a détecté et des données stockées dans la mémoire de ramification.

2. Climatiseur (1) comprenant :
∘ un échangeur de chaleur (42, 52, 23) qui amène un fluide frigorigène à le traverser tout en changeant l'état du fluide frigorigène, l'échangeur de chaleur comprenant :
• une pluralité d'ailettes (61) qui sont agencées côte-à-côte dans une direction de l'épaisseur de plaque ; et
• un tuyau (P) qui pénètre dans la pluralité d'ailettes (61) à partir de la direction de l'épaisseur de plaque et se ramifie au moins deux fois de sorte que le nombre de tuyaux à travers lesquels le fluide frigorigène passe augmente entre une première entrée/sortie (G) et des deuxièmes entrées/sorties (S1 à S4) d'un groupe d'ailettes (60) comprenant la pluralité d'ailettes (61), où le tuyau (P) se ramifie seulement deux fois entre la première entrée/sortie (G) et les deuxièmes entrées/sorties (S1 à S4),
∘ un compresseur (21, 21a) qui commande la vitesse d'écoulement du fluide frigorigène fourni à l'échangeur de chaleur (42, 52, 23) en commandant la fréquence du compresseur ;
**caractérisé en ce que** le climatiseur (1) comprend en outre
• une mémoire de ramification (80) qui stocke des données relatives à des positions de ramification des tuyaux dans l'échangeur de chaleur ;
• un détecteur de grandeur d'état (32, 33, 34, 36, 44, 55) qui détecte des grandeurs d'état du fluide frigorigène s'écoulant à travers le tuyau (P) ;
• un dispositif de commande (8) qui est configuré pour commander la fréquence du compresseur de sorte que l'état du fluide frigorigène avant les positions de ramification soit différent de l'état du fluide frigorigène après les positions de ramification sur la base de valeurs que le détecteur de grandeur d'état a détecté et des données stockées dans la mémoire de ramification.

3. Climatiseur selon la revendication 1 ou 2, dans lequel des parties de ramification (65, 66, 67) du tuyau (P) sont disposées au moins dans une partie proche d'une limite qui sépare le fluide frigorigène en phase liquide du fluide frigorigène à un état à deux phases gaz-liquide et dans une partie proche d'une limite qui sépare le fluide frigorigène à l'état à deux phases gaz-liquide du fluide frigorigène en phase gazeuse.

4. Climatiseur selon la revendication 1, 2 ou 3, dans lequel des diamètres intérieurs d'une pluralité de tuyaux ramifiés (P) sont substantiellement égaux les uns aux autres.

5. Climatiseur selon l'une quelconque des revendications 1 à 4, dans lequel les parties de ramification (65, 66, 67) du tuyau (P) ont une structure qui inverse la direction dans laquelle s'écoule le fluide frigorigène.

6. Climatiseur selon l'une quelconque des revendications 1 à 5, dans lequel le tuyau (P) se ramifie de sorte qu'un tuyau devienne deux tuyaux au niveau de la première ramification et de sorte que deux tuyaux deviennent quatre tuyaux au niveau de la deuxième ramification.

7. Climatiseur selon l'une quelconque des revendications 1 à 6, dans lequel le tuyau (P) se ramifie à des positions où la vitesse d'écoulement du fluide frigorigène dans les deuxièmes entrées/sorties (S1 à S4) du groupe d'ailettes (60) par rapport à la vitesse d'écoulement du fluide frigorigène dans la première entrée/sortie (G) du groupe d'ailettes (60) devient le double ou plus et le triple ou moins.
